(19) Europäisches Patentamt
European Patent Office
Office européen des brevets

(11) **EP 3 457 652 B1**

(12) **EUROPEAN PATENT SPECIFICATION**

(45) Date of publication and mention
of the grant of the patent:
**07.07.2021 Bulletin 2021/27**

(51) Int Cl.:
***H04L 27/26*** *(2006.01)*     ***H04W 16/02*** *(2009.01)*

(21) Application number: **18196596.3**

(22) Date of filing: **27.01.2005**

(54) **METHODS AND APPARATUS FOR OVERLAYING MULTI-CARRIER AND DIRECT SEQUENCE SPREAD SPECTRUM SIGNALS IN A BROADBAND WIRELESS COMMUNICATION SYSTEM**

VERFAHREN UND VORRICHTUNG ZUM ÜBERLAGERN VON MEHRTRÄGER- UND DIREKTSEQUENZSPREIZSPEKTRUMSSIGNALEN IN EINEM DRAHTLOSBREITBANDKOMMUNIKATIONSSYSTEM

PROCÉDÉS ET APPAREIL PERMETTANT DE SUPERPOSER DES ONDES PORTEUSES MULTIPLES ET DES SIGNAUX À SPECTRE ÉTALÉ À SÉQUENCE DIRECTE DANS UN SYSTÈME DE COMMUNICATION SANS FIL À LARGE BANDE

(84) Designated Contracting States:
**AT BE BG CH CY CZ DE DK EE ES FI FR GB GR HU IE IS IT LI LT LU MC NL PL PT RO SE SI SK TR**

(30) Priority: **29.01.2004 US 540032 P**
**30.01.2004 US 540586 P**

(43) Date of publication of application:
**20.03.2019 Bulletin 2019/12**

(60) Divisional application:
**21170377.2**

(62) Document number(s) of the earlier application(s) in accordance with Art. 76 EPC:
**17163371.2 / 3 208 985**
**14000130.6 / 2 723 003**
**05712825.8 / 1 712 019**

(73) Proprietor: **Neo Wireless LLC**
**Wayne, PA 19087 (US)**

(72) Inventors:
• **LI, Xiadong**
**Kirkland, WA Washington 98033 (US)**
• **LO, Titus**
**Bellevue, WA 98004 (US)**
• **LI, Kemin**
**Bellevue, WA Washington 98006 (US)**
• **HUANG, Haiming**
**Bellevue, WA Washington 98007 (US)**

(74) Representative: **Grünecker Patent- und Rechtsanwälte**
**PartG mbB**
**Leopoldstraße 4**
**80802 München (DE)**

(56) References cited:
**CN-A- 1 452 326**     **US-A- 5 909 436**
**US-A1- 2001 021 182**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

CROSS-REFERENCE TO RELATED APPLICATION(S)

This application claims the benefit of U.S. Provisional Patent Application No. 60/540,586, filed on January 30, 2004, and of U.S. Provisional Patent Application No. 60/540,032, filed on January 29, 2004.

BACKGROUND

A direct Sequence Spread Spectrum (DSSS) system is inherently capable of supporting multi-cell and multi-user access applications through the use of orthogonal spreading codes. The initial access of the physical channel and frequency planning are relatively easier because of interference averaging in a DSSS system. It has been widely used in some existing wireless networks. However, a DSSS system using orthogonal spreading codes, may suffer severely from the loss of orthogonally in a broadband environment due to multi-path propagation effects, which results in low spectral efficiency.

In broadband wireless communications, Multi-Carrier (MC) technology is drawing more and more attention because of its capability. An MC system such as an Orthogonal Frequency Division Multiplexing (OFDM) system is capable of supporting broadband applications with higher spectral efficiency. An MC system mitigates the adverse effects of multi-path propagation in wireless environments by using cyclic prefixes to extend the signal period as the data is multiplexed on orthogonal sub-carriers. In effect, it converts a frequency selective channel into a number of parallel flat fading channels which can be easily equalized with simple one-tap equalizers. The modulator and the demodulator can be executed efficiently via the fast Fourier transform (FFT) with much lower cost. However, MC systems are vulnerable while operating in multi-user and multi-cell environments - see also US 5 909 436 A (ENGSTROM BO [SE] ET AL) 1 June 1999.

BRIEF DESCRIPTION OF THE DRAWINGS

Figure 1 illustrates a basic structure of a multi-carrier signal in the frequency domain, made up of subcarriers.

Figure 2 illustrates a radio resource being divided into small units in both frequency and time domains.

Figure 3 illustrates a frame structure of an exemplary OFDM system.

Figure 4 illustrates three examples of a subframe structure in the exemplary OFDM system.

Figure 5 illustrates slot structure of the OFDM system and the overlay system.

Figure 6 is an illustration of MC signals overlaid with DSSS signals in the frequency domain where the power level of the DSSS signal is much lower than that of the MC signal.

Figure 7 is same as Figure 6 wherein not all MC subchannels are occupied.

Figure 8 illustrates a transmitter structure of MC and DSSS overlay system.

Figure 9 illustrates a receiver structure of MC and DSSS overlay system.

Figure 10 illustrates examples of communications between a base station and multiple mobile stations transmitting DSSS and MC signals.

Figure 11 illustrates a mobile station sending DSSS signals to its current serving base station, or other base stations.

Figure 12 illustrates using interference cancellation technique to cancel interfering DSSS signal in a composite signal to obtain a clearer MC signal.

Figure 13 illustrates a DSSS signal and a MC signal fully overlaid or partially overlaid at MC symbol or slot boundary in time domain.

Figure 14 illustrates a DSSS signal with a high Peak to Average Ratio in frequency domain causing strong interference to certain MC subcarriers.

Figure 15 illustrates using spectrum nulls in DSSS signal to protect an MC control subchannel.

Figure 16 illustrates spectrum control for DSSS signal using simple sub-sampling method.

Figure 17 illustrates examples of communications between a base station and multiple mobile stations transmitting both DSSS and MC signals.

Figure 18 illustrates a typical channel response in the time and frequency domains. By estimating the peaks of a channel response in the time domain, the channel profile in the frequency domain can be obtained.

DETAILED DESCRIPTION

A broadband wireless communication system where both the Multi-Carrier (MC) and direct Sequence Spread Spectrum (DSSS) signals are intentionally overlaid together in both time and frequency domains is described. The system takes advantage of both MC and DSSS techniques to mitigate their weaknesses. The MC signal is used to carry broadband data signal for its high spectral efficiency, while the DSSS signal is used for special purpose processing, such as initial random access, channel probing, and short messaging, in which signal properties such as simplicity, self synchronization, and performance under severe interference are of concern. In the embodiments of this invention both the MC and the DSSS signals are distinguishable in normal operations and the interference between the overlaid signals is insufficient to degrade the expected performance of either signal.

Unlike a typical CDMA system where the signals are designed to be orthogonal in the code domain or an OFDM system where the signals are designed to be orthogonal in frequency domain, the embodiments of this invention overlay the MC signal, which is transmitted without or with very low spreading, and the DSSS signal, which is transmitted at a power level lower than that of the MC signal.

In accordance with aspects of certain embodiments of this invention, the MC signal is modulated on subcarriers in the frequency domain while the DSSS signal is modulated by the information bits or symbols in the time domain. In some cases the information bits modulating the DSSS sequence are always one.

This invention further provides apparatus and means to implement the mentioned processes and methods in a broadband wireless multi-access and/or multi-cell network, using advanced techniques such as transmit power control, spreading signal design, and iterative cancellation.

The mentioned MC system can be of any special format such as OFDM or Multi-Carrier Code Division Multiple Access (MC-CDMA). The presented methods and apparatus can be applied to downlink, uplink, or both, where the duplexing technique can be either Time Division Duplexing (TDD) or Frequency Division Duplexing (FDD).

MULTI-CARRIER COMMUNICATION SYSTEM

The physical media resource (e.g., radio or cable) in a multi-carrier communication system can be divided in both the frequency and time domains. This canonical division provides a high flexibility and fine granularity for resource sharing.

The basic structure of a multi-carrier signal in the frequency domain is made up of subcarriers. Within a particular spectral band or channel, there are a fixed number of subcarriers. There are three types of subcarriers:

1. Data subcarriers, which contain information data;
2. Pilot subcarriers, whose phases and amplitudes are predetermined and made known to all receivers and which are employed for assisting system functions such as estimation of system parameters; and
3. Silent subcarriers, which have no energy and are used for guard bands and DC carrier.

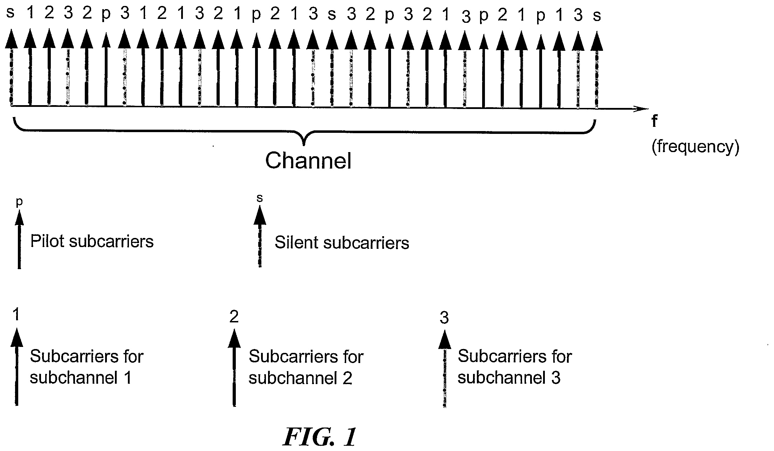

Figure 1 illustrates a basic structure of a multi-carrier signal in the frequency domain, made up of subcarriers. The data subcarriers can be arranged into groups called subchannels to support scalability and multiple-access. The carriers forming one subchannel are not necessarily adjacent to each other. As depicted in Figure 1, each user may use part or all of the subchannels.

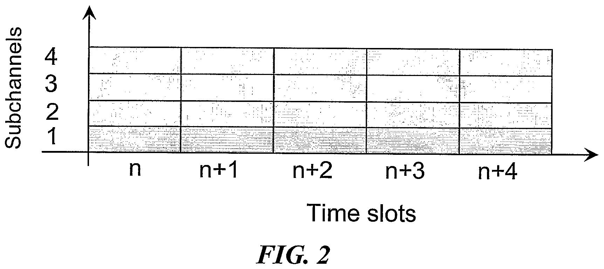

Figure 2 illustrates a radio resource being divided into small units in both frequency (subchannels) and time domains (time slots). The basic structure of an MC signal in the time domain is made up of time slots to support multiple-access.

AN EXEMPLARY MC SYSTEM

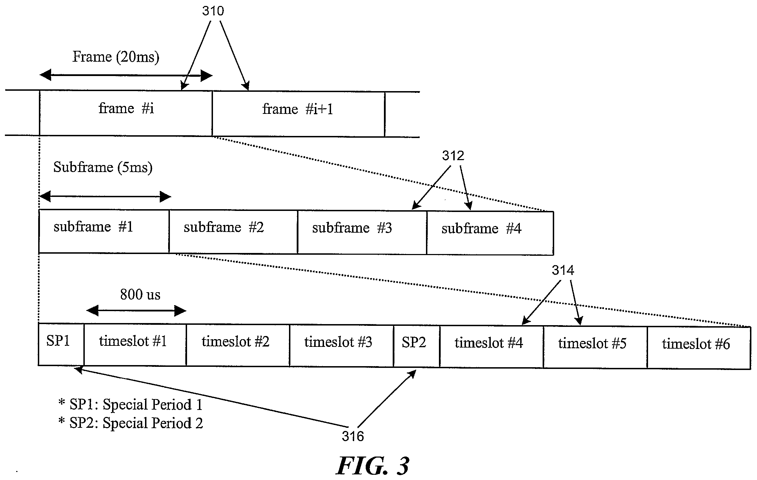

An OFDM system is used in the system as a special case of an MC system. The system parameters for the uplink under consideration are listed in Table 1. Figure 3 illustrates a frame structure of a suitable OFDM system. In this system, a 20ms frame 310 is divided into four 5ms subframes 312. One subframe 312 consists of six time slots 314 and two special periods 316, which serve transition time from downlink to uplink and vise versa. The six time slots in one subframe can be configured as either uplink or downlink slots symmetrically or asymmetrically.

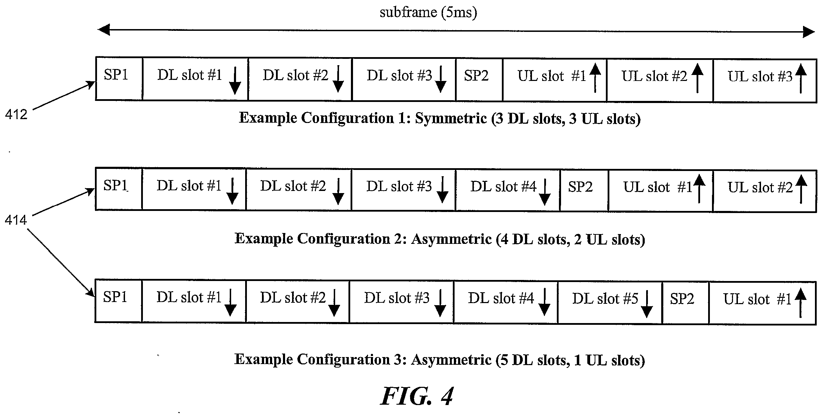

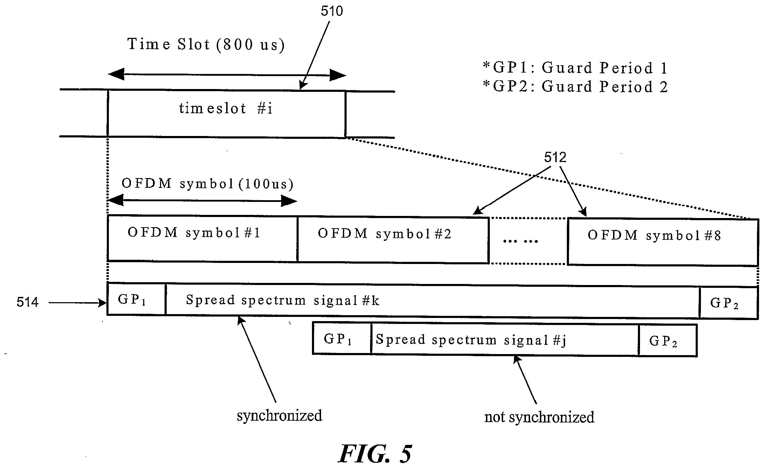

Figure 4 illustrates three examples of a subframe structure in an OFDM system: one symmetric configuration 412 and two asymmetric configurations 414, each with differing number of uplink (UL) and downlink (DL) slots. Figure 5 illustrates a slot structure of an OFDM system and an overlay system. One $800\mu s$ time slot 510 is comprised of 8 OFDM symbols 512, which are overlaid by DSSS signals 514 in the time domain. Two guard periods GP1 and GP2 are allocated for the DSSS signal 514.

**Table 1: Uplink system parameters**

| Data Rate | 2, 4, 8, 16, 24 Mbps |
|---|---|
| Modulation | QPSK, 16-QAM |
| Coding rate | 1/8, 1/4, 1/2, 3/4 |
| IFFT/FFT size | 1024 |
| OFDM symbol duration | 100 us |
| Guard interval | 11.11 us |
| Subcarrier spacing | 9.765625 kHz |
| System sampling rate (fs) | 11.52 MHz |
| Channel spacing | 10 MHz |

DETAILED DESCRIPTION OF A MC AND DSSS OVERLAY SYSTEM

Figure 5 illustrates the overlay of the MC and DSSS signals, where the DSSS signal overlaps with the MC signal in the time domain. The overlaid signal can be aligned at the boundary of MC slot or MC symbol when they are synchronized (for example, DSSS signal #k in Figure 5). It can also be not aligned when they are not synchronized (for example, DSSS signal #j in Figure 5). In one embodiment, the DSSS signal is placed at the period of cyclic prefix of the OFDM symbol.

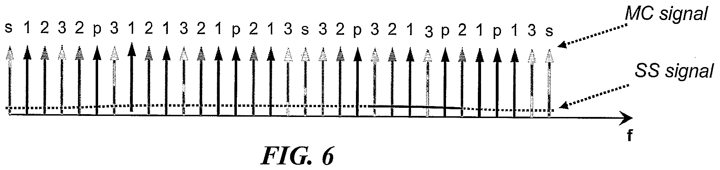

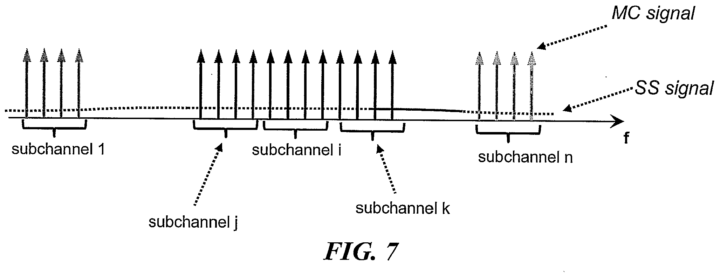

Figure 6 is an illustration of MC signals overlaid with DSSS signals in the frequency domain where the power level of the DSSS signal is much lower than that of the MC signal. The subcarriers in a subchannel are not necessarily adjacent to each other in the frequency domain. Figure 7 is similar to Figure 6 wherein not all MC subchannels are occupied. It illustrates a scenario where some MC subchannels are not energized.

In another embodiment, the MC signal is modulated on subcarriers in the frequency domain while the DSSS signal is modulated in either the time domain or the frequency domain. In one embodiment the modulation symbol on the DSSS sequence is one and the sequence is unmodulated.

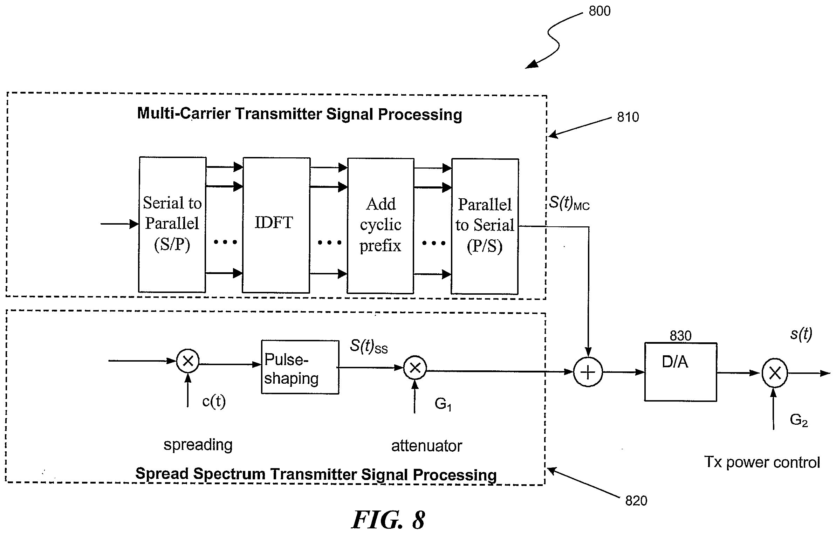

Figure 8 illustrates a transmitter structure 800 of an MC and DSSS overlay system, wherein the MC signal and DSSS signal are added together prior to Digital to Analog (D/A) conversion 830. In Figure 8, the top branch 810 is an OFDM transmitter and the bottom branch 820 is the spread spectrum transmitter. In the MC transmitter, the S/P buffer converts the sequential inputs into parallel outputs, which are in turn inputted to the inverse discrete Fourier transform (IDFT). The outputs from the IDFT are the time domain signals, which are converted from parallel to sequential signals after a cyclic prefix is added. Adding the prefix can also be performed after the P/S conversion. In the spread spectrum transmitter, the DSSS sequence is modulated by the information bits or symbols and the modulated signals will undergo pulse-shaping filtering so that the signal spectrum meets specified criteria.

A digital attenuator (G1) is used for the DSSS signal to adjust its transmitted signal level relative to the MC signal. The two signals are overlaid in the digital domain before converting to a composite analog signal. A second analog variable gain (G2) is used subsequent to the D/A converter 830 to further control the power level of the transmitted signal. When the MC signal is not present, both G1 and G2 will be applied to the DSSS signal to provide sufficient transmission dynamic range. G2 can be realized in multiple circuit stages.

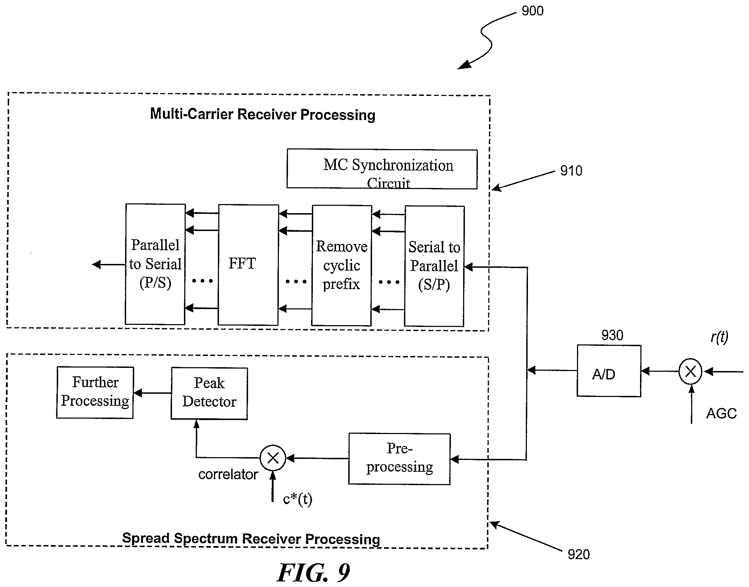

Figure 9 illustrates a receiver structure 900 of an MC and DSSS overlay system. A composite signal is processed by a MC receiver 910 and DSSS receiver 920. At the receiver side, after automatic gain control (AGC), an Analog-to-Digital (A/D) converter 930 converts the received analog signal to digital signal. The MC receiver basically performs a reverse process of the MC transmitter. The MC synchronization circuit carries out the synchronization in both time and frequency for the receiver to function properly. The outputs of the P/S are information bits or symbols. To detect whether a DSSS signal is present, the signal is despread with a matched filter or a correlator, using the access sequence, to check if the correlation peak exceeds a predefined threshold. The information from the DSSS receiver 920 will then be used to decode the mobile station's signature in the case of initial random access; to derive the channel information in the case of channel probing; or to decode the information bit in the case of short messaging.

In one embodiment a rake receiver is used in the DSSS receiver 920 to improve its performance in a multi-path environment. In another embodiment, the MC signal is processed as if no DSSS signal is present. In yet another embodiment, advanced interference cancellation techniques can be applied to the composite signal to cancel the DSSS signal from the composite signal thus maintaining almost the same MC performance.

The transmitted composite signal for user i can be represented by:

$$s_i(t) = G_{i,2} * [G_{i,1} * s_{i,SS}(t) + b_i * s_{i,MC}(t)] \tag{1}$$

where bi is 0 when there is no MC signal and is 1 when an MC signal is present. Similarly, $G_{i,1}$ is 0 when there is no DSSS signal and varies depending on the power setting of the DSSS signal relative to the MC signal when a DSSS signal is present. $G_{i,2}$ is used to control the total transmission power for user i. The received signal can be represented by:

$$r(t) = \sum_{i=1}^{M} s_i(t) + N + I \tag{2}$$

where $M$ is the total number of mobile station actively communicating with the current base station, $N$ is the Gaussian noise, and $I$ is the total interference from all the mobile stations in current and other base stations.

Denoting the received power of the MC signal as $P_{MC}$ and the received power of the DSSS signal as $P_{SS}$, the signal to interference and noise ratio (SINR) for the MC signal is:

$$SINR_{MC} = P_{MC} / (N+I) \tag{3}$$

when the DSSS signal is not present; and is

$$SINR'_{MC} = P_{MC} / (N+I+P_{SS}) \tag{4}$$

when the DSSS signal is present. The system is designed such that the $SINR'_{MC}$ meets the SINR requirement for the MC signal and its performance is not compromised in spite of interference from the overlaid DSSS signal.

In one embodiment, the DSSS signal is power controlled such that $P_{SS}$ is well below the noise level, $N$.

On the other hand, the SINR for the DSSS signal is

$$SINR_{SS} = P_{SS} / (N+I+P_{MC}) \tag{5}$$

Denoting the spreading factor for the DSSS signal as $K_{SF}$, the effective SINR for one symbol after despreading is:

$$SINR'_{SS} = P_{SS} * K_{SF} / (N+I+P_{MC}) \tag{6}$$

$SINR'_{SS}$ must be high enough to meet the performance requirement when detecting or decoding the information conveyed in the DSSS signal. In one embodiment, $K_{SF}$ is chosen to be 1000, so that the DSSS signal is boosted with 30dB spreading gain after despreading.

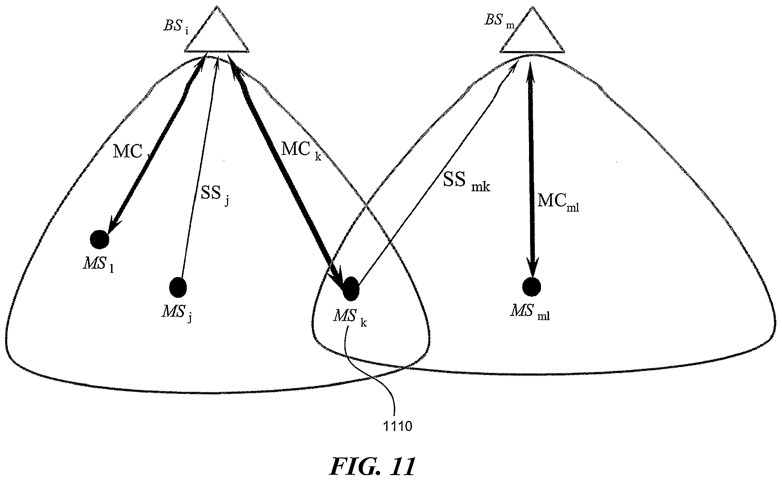

Figure 11 illustrates a mobile station 1110 sending DSSS signals to its current serving base station or other base stations. The latter case is especially helpful in hand-off processes. In this Figure, a mobile station $MS_k$ is communicating with a $BS_i$ using an MC signal while transmitting a DSSS signal to $BS_k$.

POWER CONTROL

As discussed above, one design issue is to minimize the power of the DSSS signal to reduce its interference with the MC data signal. In one embodiment, the initial power setting of a mobile station, $T_{MS\_tx}$ (in dBm), is set based on path loss, $L_{path}$ (in dB), and the desired received power level at the base station, $P_{BS\_rx\_des}$ (in dBm),

$$T_{MS\_tx} = P_{BS\_rx\_des} + L_{path} - C_1 - C_2 \qquad (7)$$

$C_1$ (in dB) is set to a proper value so that the SINR of the MC as specified in equation (4) meets its requirement. $C_2$ (in dB) is an adjustment to compensate for the power control inaccuracy. Open loop power control inaccuracy is mainly caused by a discrepancy between an estimated path loss by the mobile station and the actual path loss.

In one embodiment, $C_1$ is set to 9dB for MC using QPSK modulation with ½ error control coding or 15dB for MC using 16QAM modulation with ½ error control coding. $C_2$ is set to 10dB or 2dB depending on whether the mobile station is under open loop power control or closed loop power control. Power control for the DSSS signal also eases the spectrum mask requirement for the DSSS signal because the DSSS signal level is much lower than that of the MC signal.

With total power offset of $C_1 + C_2$ subtracted from an initial transmission power of the DSSS signal, the spreading factor of the DSSS signal needs to be set high enough (e.g., 512 (27dB) or higher) so that the DSSS signal can be detected in normal conditions. This requires a sufficient number of bits of the A/D converter at the base station, for example, 12 bits.

In one embodiment, the D/A converter at the mobile station uses 12 bits, among which 8 bits are targeted for the MC signal (assuming 3 bits are reserved for MC peak to average consideration). Thus, there are enough bits left for the DSSS signal even with significant attenuation relative to the MC signal.

CANCELING THE INTERFERENCE OF DSSS SIGNAL TO THE MC SIGNAL

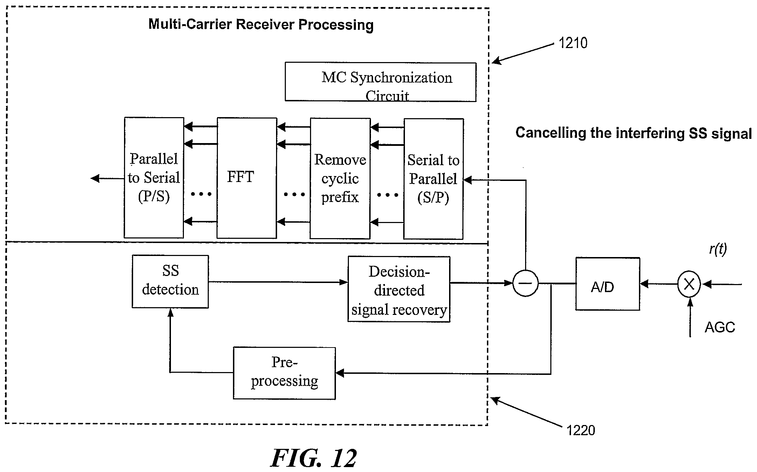

In one example the base station employs interference cancellation techniques to cancel the DSSS interference to the MC signal. Figure 12 illustrates a system for using an interference cancellation technique to cancel an interfering DSSS signal in a composite signal to obtain a clearer MC signal. First, a DSSS signal is detected by the DSSS receiver 1220; then it is subtracted (decision directed) from the total received signal to obtain a cleaner MC data signal in the MC receiver 1210, as illustrated in Figure 12. In another embodiment, multiple step iterative cancellation can be applied to further improve the effectiveness of the interference cancellation. The MC receiver basically performs a reverse process of the MC transmitter mentioned above. The MC synchronization circuit carries out the synchronization in both time and frequency for the receiver to function properly. The outputs of the P/S are information bits or symbols.

DSSS SIGNAL DESIGN

DSSS sequences are chosen to have good autocorrelation and cross-correlation properties (i.e., with high peak to sidelobe ratio). In one embodiment, pulse-shaping is applied to restrict the spectrum mask of DSSS signals and to reduce impacts on the MC signals in the frequency domain. For example, the transmitter pulse-shaping filter applied to the DSSS signal can be a root-raised cosine (RRC) with roll-off factor $\alpha$ in the frequency domain. The impulse response of the chip impulse filter $RC_0(t)$ is

$$RC_0(t) = \frac{\sin\left(\pi \frac{t}{T_C}(1-\alpha)\right) + 4\alpha \frac{t}{T_C}\cos\left(\pi \frac{t}{T_C}(1+\alpha)\right)}{\pi \frac{t}{T_C}\left(1-\left(4\alpha \frac{t}{T_C}\right)^2\right)} \qquad (8)$$

where $T_c$ is the chip duration.

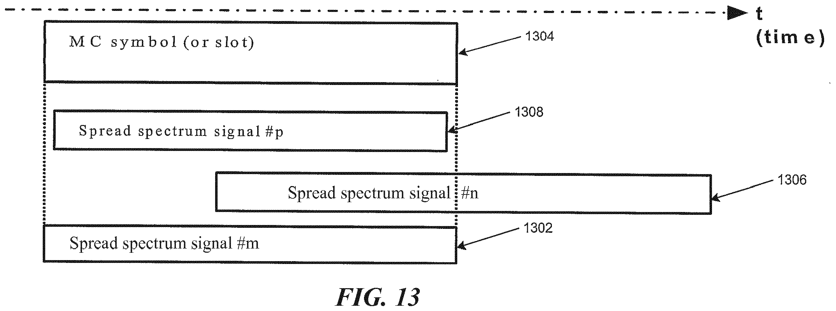

Figure 13 illustrates a DSSS signal and a MC signal fully overlaid or partially overlaid with an MC symbol or slot boundary in the time domain. The DSSS and the MC signals may be aligned at the symbol (or slot) boundary when they are synchronized, or partially overlapped in the time domain when they are not synchronized, as shown in Figure 13, where a DSSS signal #m 1302 fully overlaps with a MC symbol (or slot) 1304 in time domain, while a DSSS signal #n 1306 overlaps with the MC symbol (or slot) only partially.

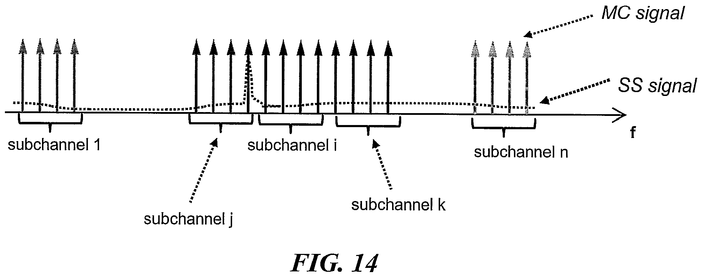

Figure 14 illustrates a DSSS signal with a high Peak to Average Ratio in the frequency domain causing strong interference to certain MC subcarriers. The sequence used to spread the DSSS signal has to be designed to avoid cases where the DSSS signal may have a high Peak to Average ratio (PAR) in the frequency domain and its spikes may cause severe interference with some MC subcarriers, as illustrated in Figure 14. In one embodiment, the DSSS sequence is designed so that, in partial or in full, it has low PAR in the frequency domain using signal processing techniques, such as a PAR reduction algorithm. Either binary or non binary sequences can be used.

In another embodiment, Golay complementary sequences, Reed-Muller codes, or the codes designed with similar construction methods may be used to control the PAR of DSSS sequences in the frequency domain, thereby limiting the interference of DSSS signals to MC signals, which are demodulated in the frequency domain. In one embodiment, guard periods are added to the DSSS signal which overlaps with one MC symbol, as shown by DSSS signal #p 1308 in Figure 13. The guard periods ensure that a well-designed DSSS sequence (with low PAR in frequency domain) causes little interference with the MC subcarriers even when there is time misalignment in a DSSS signal relative to the OFDM symbol period.

Within MC subcarriers, the control subcarriers are more important than the data subcarriers and may need to have a better protection in the overlay system.

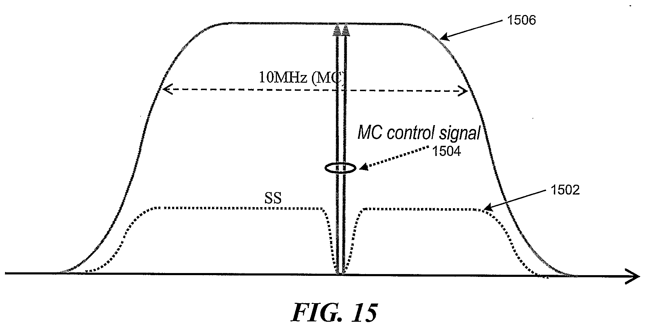

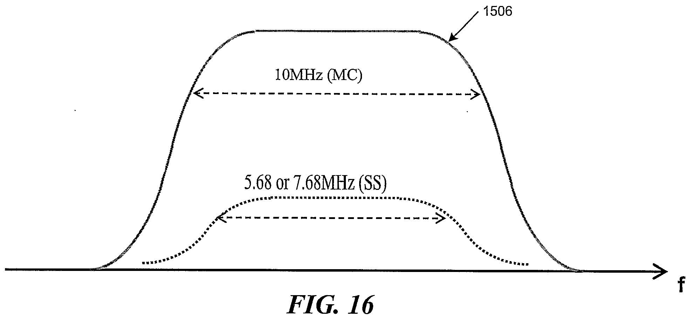

Figure 15 illustrates using spectrum nulls in the DSSS signal 1502 to protect an MC control subchannel. In one embodiment, the DSSS sequence is designed to have spectrum nulls at MC control subchannels to avoid excess interference with the uplink MC control signals 1504, as illustrated in Figure 15. One such scheme is to use sub-sampling such that the chip rate of the DSSS signal is 1/2 or 2/3 of the system sampling rate, which means the DSSS spectrum will only occupy the center portion with a width of 5.76MHz or 7.68MHz out of the 10MHz available spectrum 1506, as shown in Figure 16. Its interference with the MC sub-carriers over the rest of the spectrum will be much lower where the MC subchannels, carrying control information or using higher modulation subcarriers (such as 16QAM), are placed.

INITIAL RANDOM ACCESS USING THE OVERLAY SCHEME

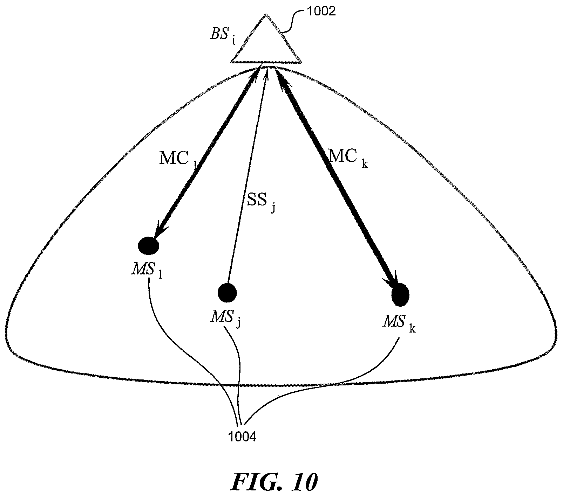

Figure 10 illustrates a DSSS signal used as initial random access by the mobile station $MS_j$ 1004, in an overlay system. In the mean time, $MS_l$ and $MS_k$ are transmitting MC signals to the base station BS; 1002 . In one embodiment of the invention, the DSSS signal is used for initial random access and the MC signal is used by multiple mobile stations to transmit high rate data and related control information, as illustrated in Figure 10. In this arrangement the mobile station $MS_j$ is transmitting its initial access DSSS signal simultaneously with the MC signals from other mobile stations (in this case, $MS_l$ and $MS_K$) to the base station $BS_i$.

In the initial random access of a multi-carrier multiple access system, a mobile station cannot transmit directly onto the control subchannel because its transmission time and power have not been aligned with other mobile stations. When this mobile station powers up or wakes up from a sleep mode, it first listens to a base station broadcasting channel and finds an available random access DSSS channel. It then sends an initial random access signal over the DSSS channel with a certain signature code or sequence that is designated to the corresponding base station and is broadcasted to all the mobile stations by each base station.

The initial access DSSS signal arrives at the base station together with MC signals from other mobile stations, each carrying data and control information. The initial power level of the DSSS signal is based on the open power loop control settings. A sufficient guard period is reserved in the DSSS signal to account for initial time alignment uncertainty, as shown in Figure 5.

If the base station successfully detects the DSSS signal, it sends the acknowledgement (ACK) carrying a unique mobile station identifier and power and time adjustments of the mobile on the downlink control channel in the next available timeslot. The mobile station whose transmission signature matches that of the acknowledgement then moves to the designated uplink MC control channel using the assigned time and power values and further completes the message transmission.

If no feedback is received at the mobile station after a pre-defined number of slots, it assumes that the access slot was not detected by the base station, and will ramp up the transmission power of the DSSS signal by one step and re-transmit it, until it reaches the maximum allowable transmit signal power or the maximum retry times. In one embodiment, the power ramping step of the mobile station is set to be 1dB or 2dB which is configured by the base station on the downlink broadcasting channel. The maximum allowable transmit signal power and the retry times are also controlled by the base station depending on the uplink modulation/coding scheme and available access channels. During the initial random access, the DSSS signal can also be used for channel probing and short messaging.

CHANNEL PROBING USING DSSS IN THE OVERLAY SYSTEM

In one example of the invention, the DSSS signal is used to assist estimation of channel characteristics. In this case, the mobile station is already synchronized in time and frequency with the base station, and its transmission of the MC signal is under closed-loop power control with the base station.

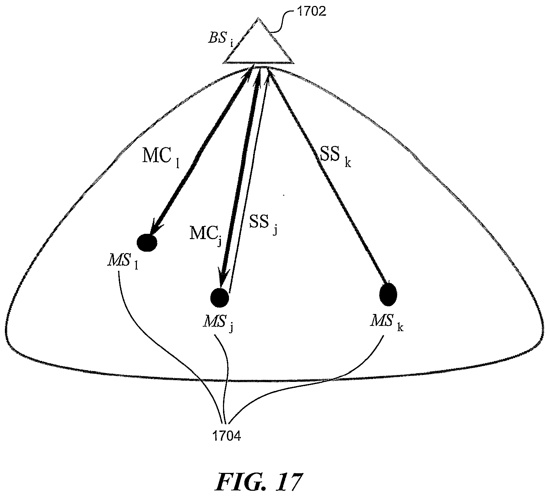

Figure 17 illustrates examples of communications between a base station 1702 and multiple mobile stations 1704 transmitting both DSSS and MC signals. DSSS signal is used for channel probing or to carry short messages. In this case, $MS_j$ 1704 is transmitting both an MC signal and a DSSS signal to the base station $BS_i$ 1702. It is also under closed loop power control with the base station $BS_i$ 1702. In Figure 17, the mobile station $MS_j$ 1704 is transmitting its DSSS signal simultaneously with its own MC signal. Other mobile stations (in this case, $MS_l$ 1704 and $MS_K$ 1704) are transmitting either MC or DSSS signals to the base station $BS_i$ 1702.

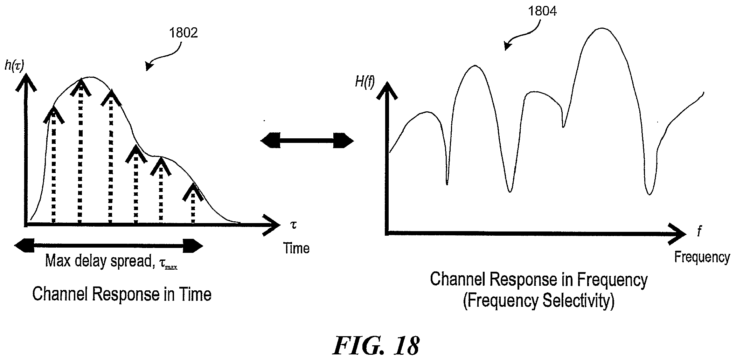

Figure 18 illustrates a typical channel response in the time domain 1802 and the frequency domain 1804. By estimating the peaks of a channel response in the time domain 1802, the channel profile in the frequency domain 1804 can be obtained. A typical channel response in the time domain and frequency domain for a broadband wireless system is shown in Figure 18. Using a matched filter in the DSSS receiver at the base station, the peaks of a channel response in time can be detected.

When closed loop power control is used, the initial power settings will be much more accurate than by using open loop power control alone. Thus, the margin reserved for power control inaccuracy can be reduced to a much smaller value. Furthermore, a bigger spreading factor can be used since no data information needs to be conveyed in the DSSS signal. This leaves a dynamic range large enough for detecting multi-path peaks from the output of the match filter or correlator, thereby generating a better channel profile. When and how often a mobile station should send the DSSS signal for channel probing is configurable by the network or the mobile station.

In one example the base station dictates the mobile station to transmit the channel probing DSSS when it needs an update of the mobile station's channel characteristics. In another embodiment, the base station polls the mobile station during its silent period and gets an update of the mobile station's information such as transmission timing and power from the probing DSSS signal. In yet another embodiment, the channel profile information is used by the base station to determine the proper modulation/coding and pilot pattern. In yet another example the channel profile information is used for advanced antenna techniques such as beamforming. In one embodiment, channel probing with the DSSS signaling is performed without close loop power control or time synchronization.

SHORT MESSAGE USING DSSS IN THE OVERLAY SYSTEM

In one embodiment of the invention, the DSSS signal is used to carry short messages. In this case, the mobile station is already synchronized in time and frequency with the base station, and its transmission of a MC signal is also under closed-loop power control with the base station. As shown in Figure 17, the mobile station $MS_j$ is transmitting its DSSS signal carrying a short message simultaneously with its own MC signal. Other mobile stations (in this case, $MS_l$ and $MS_K$) are transmitting either the MC signal or DSSS signal to the base station $BS_i$. In this case, the short message carried by the DSSS signal has a much lower data rate compared with that of the MC signal. In another embodiment, short messaging using the DSSS signaling is performed without close loop power control or time synchronization.

The above detailed description of the embodiments of the invention is not intended to be exhaustive or to limit the invention to the precise form disclosed above or to the particular field of usage mentioned in this disclosure. While specific embodiments of, and examples for, the invention are described above for illustrative purposes, various equivalent modifications are possible within the scope of the invention, as those skilled in the relevant art will recognize. Also, the teachings of the invention provided herein can be applied to other systems, not necessarily the system described above.

Changes can be made to the invention in light of the above "Detailed Description." While the above description details certain embodiments of the invention and describes the best mode contemplated, no matter how detailed the above appears in text, the invention can be practiced in many ways. Therefore, implementation details may vary considerably while still being encompassed by the invention disclosed herein. As noted above, particular terminology used when describing certain features or aspects of the invention should not be taken to imply that the terminology is being redefined herein to be restricted to any specific characteristics, features, or aspects of the invention with which that terminology is associated.

**Claims**

1. A communication method for a mobile station operating in accordance with a time frame structure that includes a plurality of frames, each frame comprising a plurality of subframes, each subframe comprising a plurality of time slots, each time slot comprising a plurality of Orthogonal Frequency Division Multiplexing, OFDM, symbols, the method comprising:

   receiving from a base station information about availability of a random access channel;
   transmitting a random access signal over the random access channel within an uplink frequency band, wherein

the random access signal contains a code sequence that is designated to the base station and sub-sampled with respect to a system sampling rate; and

the random access signal has a time duration longer than multiple of the OFDM symbols;

receiving an acknowledgement to the random access signal from the base station, the acknowledgement carrying an identifier associated with the mobile station and power and time adjustments; and

transmitting a message over a control channel as an OFDM signal within the uplink frequency band having a timing and power based on the time and power adjustments.

2. The method of claim 1, wherein a guard period is added to the random access signal.

3. The method of claim 2, wherein:

the code sequence is a Golay complementary sequence, a Reed-Muller code, or a sequence constructed to reduce peak-to-average ratio; or

the code sequence has an autocorrelation with a high peak-to-sidelobe ratio.

4. The method of claim 1, wherein some frequency components within the random access channel are nulled.

5. The method of claim 1, wherein the random access signal is power controlled for transmission.

6. The method of claim 5, wherein an initial transmission power level of the random access signal is based on a path loss between the mobile station and the base station.

7. A mobile station operating in accordance with a time frame structure that includes a plurality of frames, each frame comprising a plurality of subframes, each subframe comprising a plurality of time slots, each time slot comprising a plurality of Orthogonal Frequency Division Multiplexing, OFDM, symbols, the mobile station comprising:

a receiver configured to receive from a base station information about availability of a random access channel;

a transmitter configured to transmit a random access signal over the random access channel within an uplink frequency band, wherein

the random access signal contains a code sequence that is designated to the base station and sub-sampled with respect to a system sampling rate; and

the random access signal has a time duration longer than multiple of the OFDM symbols;

a receiver configured to receive an acknowledgement to the random access signal from the base station, the acknowledgement carrying an identifier associated with the mobile station and power and time adjustments; and

a transmitter configured to transmit a message over a control channel as an OFDM signal within the uplink frequency band having a timing and power based on the time and power adjustments.

8. The mobile station of claim 7, wherein a guard period is added to the random access signal.

9. The mobile station of claim 8, wherein:

the code sequence is a Golay complementary sequence, a Reed-Muller code, or a sequence constructed to reduce peak-to-average ratio; or

the code sequence has an autocorrelation with a high peak-to-sidelobe ratio.

10. The mobile station of claim 7, wherein some frequency components within the random access channel are nulled.

11. The mobile station of claim 7, wherein the random access signal is power controlled for transmission, and wherein an initial transmission power level of the random access signal is based on a path loss between the mobile station and the base station.

**Patentansprüche**

1. Kommunikationsverfahren für eine Mobilstation, die gemäß einer Zeitblockstruktur arbeitet, die mehrere Blöcke enthält, wobei jeder Block mehrere Unterblöcke enthält, wobei jeder Unterblock mehrere Zeitabschnitte aufweist, wobei jeder Zeitabschnitt mehrere Symbole für orthogonale Frequenzdivisionsmultiplexing, OFDM, aufweist, wobei das Verfahren umfasst:

   Empfangen einer Basisstationsinformation über die Verfügbarkeit eines Zufallszugriffskanals;
   Senden eines Zufallszugriffssignals über den Zufallszugriffskanal innerhalb eines Aufwärtsverbindungsfrequenzbandes, wobei

      das Zufallszugriffssignal eine Codesequenz enthält, die der Basisstation zugeordnet ist und in Bezug auf eine Systemabtastrate sub-abgetastet ist; und
      das Zufallszugriffssignal eine Zeitdauer hat, die länger ist als mehrere der OFDM-Symbole;

   Empfangen einer Bestätigung für das Zufallszugriffssignal aus der Basisstation, wobei die Bestätigung eine Kennung, die der Mobilstation zugeordnet ist, und Leistungs- und Zeiteinstellungen überträgt; und
   Senden einer Nachricht über einen Steuerkanal als ein OFDM-Signal innerhalb des Aufwärtsverbindungsfrequenzbandes, das eine Zeitstruktur und eine Leistung hat, auf der Grundlage der Zeit- und Leistungseinstellungen.

2. Verfahren nach Anspruch 1, wobei dem Zufallszugriffssignal eine Pufferperiode hinzugefügt wird.

3. Verfahren nach Anspruch 2, wobei:

   die Codesequenz eine Golay-Komplementärsequenz, ein Reed-Muller-Code oder eine Sequenz ist, die zur Reduzierung des Spitzenwert-zu-Durchschnitts-Verhältnisses aufgebaut ist; oder
   die Codesequenz eine Autokorrelation mit einem hohen Spitzenwert-zu-Seitenlappen-Verhältnis hat.

4. Verfahren nach Anspruch 1, wobei einige Frequenzkomponenten in dem Zufallszugriffskanal genullt werden.

5. Verfahren nach Anspruch 1, wobei das Zufallszugriffssignal für das Senden bezüglich der Leistung gesteuert wird.

6. Verfahren nach Anspruch 5, wobei ein anfänglicher Sendeleistungspegel des Zufallszugriffssignals auf einem Signalwegverlust zwischen der Mobilstation und der Basisstation beruht.

7. Mobilstation, die gemäß einer Zeitblockstruktur arbeitet, die mehrere Blöcke enthält, wobei jeder Block mehrere Unterblöcke enthält, wobei jeder Unterblock mehrere Zeitabschnitte aufweist, wobei jeder Zeitabschnitt mehrere Symbole mit orthogonaler Frequenzdivisionsmultiplexing, OFDM, aufweist, wobei die Mobilstation aufweist:

   einen Empfänger, der ausgebildet ist, eine Basisstationsinformation über die Verfügbarkeit eines Zufallszugriffskanals zu empfangen;
   einen Sender, der ausgebildet ist, ein Zufallszugriffssignal über den Zufallszugriffskanal innerhalb eines Aufwärtsverbindungsfrequenzbandes zu senden, wobei

      das Zufallszugriffssignal eine Codesequenz enthält, die der Basisstation zugeordnet ist und in Bezug auf eine Systemabtastrate sub-abgetastet wird; und
      das Zufallszugriffssignal eine Zeitdauer hat, die länger ist als mehrere der OFDM-Symbole;

   einen Empfänger, der ausgebildet ist, eine Bestätigung für das Zufallszugriffssignal aus der Basisstation zu empfangen, wobei die Bestätigung eine Kennung, die der Mobilstation zugeordnet ist, und Leistungs- und Zeiteinstellungen überträgt; und
   einen Sender, der ausgebildet ist, über einen Steuerkanal eine Nachricht als ein OFDM-Signal innerhalb des Aufwärtsverbindungsfrequenzbandes, das eine Zeitstruktur und eine Leistung hat, auf der Grundlage der Zeit- und Leistungseinstellungen zu senden.

8. Mobilstation nach Anspruch 7, wobei dem Zufallszugriffssignal eine Pufferperiode hinzugefügt ist.

**9.** Mobilstation nach Anspruch 8, wobei:

die Codesequenz eine Golay-Komplementärsequenz, ein Reed-Muller-Code oder eine Sequenz ist, die zur Reduzierung des Spitzenwert-zu-Durchschnitt-Verhältnisses aufgebaut ist; oder
die Codesequenz eine Autokorrelation mit einem hohen Spitzenwert-zu-Seitenlappen-Verhältnis hat.

**10.** Mobilstation nach Anspruch 7, wobei einige Frequenzkomponenten in dem Zufallszugriffskanal genullt sind.

**11.** Mobilstation nach Anspruch 7, wobei das Zufallszugriffssignal zum Senden bezüglich der Leistung gesteuert ist, und wobei ein anfänglicher Sendeleistungspegel des Zufallszugriffssignals auf einem Signalwegverlust zwischen der Mobilstation und der Basisstation beruht.

**Revendications**

**1.** Procédé de communication pour une station mobile fonctionnant conformément à une structure de période comprenant une pluralité de trames, chaque trame comprenant une pluralité de sous-trames, chaque sous-trame comprenant une pluralité de créneaux temporels, chaque créneau temporel comprenant une pluralité de symboles de multiplexage par répartition en fréquences orthogonales OFDM, soit Orthogonal Frequency Division Multiplexing, le procédé comprenant :

la réception d'une information de station de base concernant la disponibilité d'un canal d'accès aléatoire ;
la transmission d'un signal d'accès aléatoire via le canal d'accès aléatoire dans une bande de fréquence de liaison montante, dans lequel

le signal d'accès aléatoire contient une séquence de code qui est désignée à la station de base et sous-échantillonnée par rapport à une fréquence d'échantillonnage du système ; et
le signal d'accès aléatoire a une durée supérieure à celle de multiples symboles OFDM ;

la réception d'un acquittement du signal d'accès aléatoire provenant de la station de base, l'acquittement portant un identifiant associé à la station mobile et des réglages de puissance et de temps ; et
la transmission d'un message sur un canal de contrôle comme signal OFDM dans la bande de fréquence de liaison montante ayant une synchronisation et une puissance basées sur les réglages de temps et de puissance.

**2.** Procédé selon la revendication 1, dans lequel un temps de garde est ajouté au signal d'accès aléatoire.

**3.** Procédé selon la revendication 2, dans lequel :

la séquence de code est une séquence complémentaire de Golay, un code de Reed-Muller, ou une séquence conçue pour réduire le rapport valeur de crête sur valeur moyenne ; ou
la séquence de code présente une autocorrélation avec un rapport de crête sur lobe secondaire élevé.

**4.** Procédé selon la revendication 1, dans lequel certains composants de fréquence dans le canal d'accès aléatoire sont annulés.

**5.** Procédé selon la revendication 1, dans lequel la puissance de transmission du signal d'accès aléatoire est contrôlée.

**6.** Procédé selon la revendication 5, dans lequel un niveau de puissance de transmission initial du signal d'accès aléatoire est basé sur un affaiblissement de propagation entre la station mobile et la station de base.

**7.** Station mobile fonctionnant conformément à une structure de période qui comprend une pluralité de trames, chaque trame comprenant une pluralité de sous-trames, chaque sous-trame comprenant une pluralité de créneaux temporels, chaque créneau temporel comprenant une pluralité de symboles de multiplexage par répartition en fréquences orthogonales, OFDM, la station mobile comprenant :

un récepteur configuré pour recevoir d'une station de base de l'information concernant la disponibilité d'un canal d'accès aléatoire ;
un transmetteur configuré pour transmettre un signal d'accès aléatoire via le canal d'accès aléatoire dans une bande de fréquence de liaison montante, dans lequel

le signal d'accès aléatoire contient une séquence de code qui est désignée à la station de base et sous-échantillonnée par rapport à une fréquence d'échantillonnage du système ; et
le signal d'accès aléatoire a une durée supérieure à celle de multiples symboles OFDM ;

un récepteur configuré pour recevoir un acquittement du signal d'accès aléatoire provenant de la station de base, l'acquittement portant un identifiant associé à la station mobile et des réglages de puissance et de temps ; et
un transmetteur configuré pour transmettre un message sur un canal de contrôle comme signal OFDM dans la bande de fréquence de liaison montante ayant une synchronisation et une puissance basées sur les réglages de temps et de puissance.

8. Station mobile selon la revendication 7, dans laquelle un temps de garde est ajouté au signal d'accès aléatoire.

9. Station mobile selon la revendication 8, dans laquelle :

la séquence de code est une séquence complémentaire de Golay, un code de Reed-Muller, ou une séquence conçue pour réduire le rapport valeur de crête sur valeur moyenne ; ou
la séquence de code présente une autocorrélation avec un rapport de crête sur lobe secondaire élevé.

10. Station mobile selon la revendication 7, dans laquelle certains composants de fréquence dans le canal d'accès aléatoire sont annulés.

11. Station mobile selon la revendication 7, dans laquelle la puissance de transmission du signal d'accès aléatoire est contrôlée, et dans laquelle un niveau de puissance de transmission initial du signal d'accès aléatoire est basé sur un affaiblissement de propagation entre la station mobile et la station de base.

s 1 2 3 2 p 3 1 2 1 3 2 1 p 2 1 3 s 3 2 p 3 2 1 3 p 2 1 p 1 3 s

Channel

f
(frequency)

p

Pilot subcarriers

s

Silent subcarriers

1

Subcarriers for
subchannel 1

2

Subcarriers for
subchannel 2

3

Subcarriers for
subchannel 3

*FIG. 1*

EP 3 457 652 B1

*FIG. 2*

310

Frame (20ms)

| frame #i | frame #i+1 |
|----------|------------|

312

Subframe (5ms)

| subframe #1 | subframe #2 | subframe #3 | subframe #4 |
|-------------|-------------|-------------|-------------|

314

800 us

| SP1 | timeslot #1 | timeslot #2 | timeslot #3 | SP2 | timeslot #4 | timeslot #5 | timeslot #6 |
|-----|-------------|-------------|-------------|-----|-------------|-------------|-------------|

\* SP1: Special Period 1
\* SP2: Special Period 2

316

*FIG. 3*

EP 3 457 652 B1

subframe (5ms)

| SP1 | DL slot #1 ↓ | DL slot #2 ↓ | DL slot #3 ↓ | SP2 | UL slot #1 ↑ | UL slot #2 ↑ | UL slot #3 ↑ |

412

**Example Configuration 1: Symmetric (3 DL slots, 3 UL slots)**

| SP1 | DL slot #1 ↓ | DL slot #2 ↓ | DL slot #3 ↓ | DL slot #4 ↓ | SP2 | UL slot #1 ↑ | UL slot #2 ↑ |

414

**Example Configuration 2: Asymmetric (4 DL slots, 2 UL slots)**

| SP1 | DL slot #1 ↓ | DL slot #2 ↓ | DL slot #3 ↓ | DL slot #4 ↓ | DL slot #5 ↓ | SP2 | UL slot #1 ↑ |

**Example Configuration 3: Asymmetric (5 DL slots, 1 UL slots)**

*FIG. 4*

Time Slot (800 us)

510

timeslot #i

*GP1: Guard Period 1
*GP2: Guard Period 2

OFDM symbol (100us)

| OFDM symbol #1 | OFDM symbol #2 | ... ... | OFDM symbol #8 |

512

514 → | GP₁ | Spread spectrum signal #k | GP₂ |

| GP₁ | Spread spectrum signal #j | GP₂ |

synchronized

not synchronized

*FIG. 5*

EP 3 457 652 B1

s 1 2 3 2 p 3 1 2 1 3 2 1 p 2 1 3 s 3 2 p 3 2 1 3 p 2 1 p 1 3 s

*MC signal*

*SS signal*

f

*FIG. 6*

*FIG. 7*

**FIG. 8**

*FIG. 9*

*FIG. 10*

**FIG. 11**

EP 3 457 652 B1

**Multi-Carrier Receiver Processing**

1210

MC Synchronization Circuit

**Cancelling the interfering SS signal**

| Parallel to Serial (P/S) | · · · | FFT | · · · | Remove cyclic prefix | · · · | Serial to Parallel (S/P) |
|---|---|---|---|---|---|---|

*r(t)*

SS detection

Decision-directed signal recovery

A/D

AGC

Pre-processing

1220

*FIG. 12*

MC symbol (or slot) ← 1304

Spread spectrum signal #p ← 1308

Spread spectrum signal #n ← 1306

Spread spectrum signal #m ← 1302

*FIG. 13*

EP 3 457 652 B1

FIG. 14

EP 3 457 652 B1

**FIG. 15**

1506

10MHz (MC)

5.68 or 7.68MHz (SS)

f

*FIG. 16*

EP 3 457 652 B1

**FIG. 17**

EP 3 457 652 B1

1802

$h(\tau)$

Max delay spread, $\tau_{max}$

$\tau$
Time

Channel Response in Time

1804

$H(f)$

$f$
Frequency

Channel Response in Frequency
(Frequency Selectivity)

**FIG. 18**

**REFERENCES CITED IN THE DESCRIPTION**

**Patent documents cited in the description**

- US 54058604
- US 54003204
- US 5909436 A